Europäisches Patentamt

European Patent Office

Office européen des brevets

(11) Numéro de publication: **0 101 384 B1**

## (12) FASCICULE DE BREVET EUROPEEN

(45) Date de publication de fascicule du brevet:
**12.02.92**

(51) Int. Cl.5: **B64C 9/00**, B64C 13/16

(21) Numéro de dépôt: **83401646.1**

(22) Date de dépôt: **10.08.83**

(54) **Procédé et installation de réduction du tremblement de la voilure d'un aéronef au moyen de gouvernes actives.**

(30) Priorité: **11.08.82 FR 8213998**

(43) Date de publication de la demande:
**22.02.84 Bulletin 84/08**

(45) Mention de la délivrance du brevet:
**12.02.92 Bulletin 92/07**

(84) Etats contractants désignés:
**DE GB IT SE**

(56) Documents cités:
**GB-A- 1 086 938**
**US-A- 2 745 613**
**US-A- 3 184 188**

**ABC-Naturwissenschaft & Technik, S. 362**

(73) Titulaire: **Office National d'Etudes et de Recherches Aérospatiales (O.N.E.R.A.)**
**29 Avenue de la Division Leclerc**
**F-92320 Châtillon-sous-Bagneux(FR)**

Titulaire: **SOCIETE NATIONALE INDUSTRIELLE AEROSPATIALE**
**37 boulevard de Montmorency**
**F-75016 Paris Cedex 16(FR)**

(72) Inventeur: **Destuynder, Roger**
**16 rue du Jura**
**F-93130 Noisy Le Sec(FR)**
Inventeur: **Bouttes, Jacques**
**12 rue du Moulin Fricaux**
**F-27490 La Croix Saint Leufroy(FR)**
Inventeur: **Poisson-Ouinton, Philippe**
**79 rue des Saints Pères**
**F-75008 Paris(FR)**

(74) Mandataire: **Fort, Jacques et al**
**CABINET PLASSERAUD 84, rue d'Amsterdam**
**F-75009 Paris(FR)**

# Description

La présente invention concerne les aéronefs dont la voilure est susceptible de présenter dans certaines conditions de vol le phénomène de tremblement fréquemment désigné par le terme anglo-saxon de "buffeting".

On sait que les surfaces portantes des aéronefs sont susceptibles d'être le siège de nombreux phénomènes donnant naissance à des contraintes dans la structure et notamment dans les ailes. Un premier phénomène est mentionné dans le document GB-A-1 086 938. Il s'agit d'un phénomène de flexions alternées provoqué par des manoeuvres brutales, des turbulences ou des rafales. Ce document propose, pour réduire la flexion des ailes en mode fondamental, un procédé suivant lequel on mesure les mouvements de flexion à l'aide d'accéléromètres placés notamment en bout d'aile et on commande des surfaces aérodynamiques placées à proximité des bouts d'ailes pour réduire la flexion.

En résumé, le document GB-A-1 086 938 ne concerne que la réduction d'un phénomène complètement différent du flottement. Il n'envisage absolument pas les phénomènes oscillatoires liés au couplage de la structure avec la circulation aérodynamique environnante, phénomènes qui sont notamment le flottement et le tremblement.

Il est important à ce sujet de définir la nature du tremblement. Ce dernier résulte en particulier du couplage de la structure avec la circulation aérodynamique environnante. Le tremblement résulte en particulier d'un décollement instationnaire prenant naissance sur la voilure et produisant, par un effet de couplage avec celle-ci, des vibrations de la structure de l'aéronef. Le phénomène n'est pas critique pour l'aéronef. Mais il limite le domaine de vol des avions civils car le niveau maximal de tremblement est fixé par des règlements. Une diminution de l'intensité du tremblement permet, par exemple, de voler à une altitude supérieure et d'augmenter la masse au décollage du fait d'un rendement de vol amélioré. Le tremblement pénalise aussi les performances de vol des avions de combat en limitant leur manoeuvrabilité et les possibilités de tir.

Des décollements engendrant le tremblement peuvent apparaître à tous les régimes de vol. Ils sont particulièrement accentués en régime transonique parce qu'ils sont amplifiés par les oscillations des ondes de choc. Ils apparaissent également en vol aux grandes incidences pour une forte valeur du coefficient de portance, à l'approche des conditions de décrochage de l'aile. Le tremblement peut aussi être provoqué par les décollements résultant des aérofreins ou spoilers utilisés couramment sur les avions pour provoquer une perte de portance et la descente rapide de l'aéronef.

L'analyse des phénomènes de décollement sur une voilure montre que leur effet est double et comporte :

- un phénomène stationnaire, qui se traduit par une cassure dans la courbe de variation de la portance et du moment en fonction de l'angle d'incidence,
- un phénomène instationnaire, constitué par une zone de pressions fluctuantes instationnaires couvrant un très large spectre de fréquences. La surface de cette zone s'étend sur l'extrados et l'intensité des pulsations dans le décollement augmente avec l'incidence.

Pour de faibles décollements, seul le phénomène stationnaire est sensible car la force instationnaire créée par les pressions aléatoires reste trop faible pour exciter la structure.

Mais si la zone de décollement s'étend, le torseur des forces instationnaires engendre une excitation forcée de la voilure qui répond d'autant mieux que ses modes propres de vibration nécessitent une énergie minimale.

Ces modes de vibration créent à leur tour leur propre champ de pressions instationnaires, étendu cette fois à l'ensemble de la voilure, qui favorise en particulier les modes basse fréquence tels que la flexion alternée de l'aile à la fréquence fondamentale de celle-ci.

Divers moyens ont déjà été utilisés pour combattre le tremblement : ils tendent à éviter le décollement stationnaire en améliorant les profils des voilures ou en contrôlant l'écoulement par des générateurs de tourbillons. Mais ces moyens ne procurent qu'un recul de l'instant d'apparition du tremblement. Ils n'en limitent pas les effets et en général n'ont d'effet que sur le tremblement ayant une origine déterminée.

On connaît également (Document US-A-3 184 183) une installation destinée à limiter les contraintes imposées à la structure d'un aéronef par des manoeuvres brutales, en limitant l'action des gouvernes. En d'autres termes, il n'y a pas mise en action d'une gouverne pour réduire un phénomène, mais limitation imposée aux déplacements que tend à donner, à une gouverne, le pilote humain ou un pilote automatique.

L'invention vise à réduire le tremblement et, par là, à améliorer les performances et, éventuellement, le confort des aéronefs par un processus utilisable quelle que soit l'origine du tremblement.

L'invention part d'une approche totalement différente, parfaitement adaptée à des aéronefs munis d'un système de contrôle automatique (C.A.G.) consistant à limiter et/ou combattre l'influence des pressions instationnaires dues au mouvement vibratoire de la voilure.

L'invention propose en conséquence un procédé de réduction du tremblement conforme à la revendication 1.

On peut utiliser divers paramètres représentatifs du moment de flexion dû au tremblement (contrainte dans un longeron par exemple) ou du mouvement (accélération par exemple). Les sollicitations seront généralement créées, pour chaque élément de voilure, par une gouverne (surface aérodynamique active) remplissant également d'autres fonctions ; on peut cependant, bien que cette solution soit généralement beaucoup moins avantageuse, affecter une surface aérodynamique supplémentaire à la réduction du tremblement.

L'invention propose également une installation de réduction de tremblement d'un élément de voilure d'aéronef conforme à la revendication 2.

Les moyens de mesure peuvent être de nature très diverse et localisés en un seul point ou distribués : on peut notamment utiliser un pont de jauges de contrainte, un accéléromètre, un capteur de pression instationnaire. La gouverne intervenant localement sur l'aile sera généralement un élément oscillant à mouvement de rotation (volet par exemple) ou de translation (élément émergeant sur une hauteur variable de l'élément de voilure). Dans le premier cas, il s'agira généralement d'une gouverne intervenant de façon qu'on peut qualifier de "statique" dans le pilotage.

L'installation fonctionnant en boucle fermée, les moyens mis en oeuvre doivent évidemment être prévus pour répondre aux critères connus de stabilité des automatismes. Dans la pratique, les moyens de filtrage et de traitement peuvent être de nature analogique ou numérique. Ils seront généralement prévus pour filtrer le signal détecté et y sélectionner au moins un mode de vibration de la voilure, intégrer le signal obtenu et délivrer, à partir du signal intégré, le signal de commande de la gouverne active et qui est envoyé à des moyens moteurs actionnant la gouverne active pour lui donner une oscillation alternée amortissant les vibrations de la voilure.

La gouverne actionnée pour réduire le tremblement peut changer suivant le régime de vol et l'origine du tremblement. Toutefois, lorsque la voilure est en flèche, on mettra de préférence en oeuvre une gouverne située près de l'emplanture de l'élément de voilure car la répartition de portance, en fonction de l'envergure, intéresse toute la voilure et l'efficacité des sollicitations engendrées se trouve mieux répartie.

Parmi les gouvernes existantes, on peut citer les volets de bord de fuite (ailerons internes, utilisés pour la commande en roulis à grande vitesse notamment, flaperons), les aérofreins et même les becs de bord d'attaque.

Les aérofreins ne seront généralement utilisés comme gouvernes pour réduire le tremblement que lorsqu'ils sont sortis pour réduire la portance. Ils seront alors actionnés simultanément suivant deux lois :

- une loi stationnaire pour provoquer des déportances importantes (par exemple déflexion de 0 à 60° ) et
- une loi dynamique instationnaire capable de provoquer des oscillations d'amplitude faible, ne dépassant pas ± 1° environ, à des fréquences fonction des fréquences à atténuer, pouvant aller d'une fraction de Hz à 15 Hz environ, autour de la position imposée par la loi stationnaire.

On voit qu'un des avantages apportés par l'invention réside dans le fait que les oscillations suivant la loi dynamique instationnaire sont toujours de faible amplitude et ne nécessitent qu'un très faible prélèvement d'énergie sur les circuits de bord.

En outre, le fait que les oscillations de la surface aérodynamique sont faibles permet d'équiper la commande de butées mécaniques limitant son déplacement en cas de panne du système.

Il faut au passage remarquer que le phénomène dont l'invention combat les conséquences, c'est-à-dire les vibrations induites, est entièrement différent des rafales ou des manoeuvres violentes ou en atmosphère agitée qui sont des phénomènes non entretenus de durée brève, dûs à des perturbations externes. Le tremblement ("buffeting") est induit par un couplage aéroélastique entre le décollement des filets d'air sur la voilure, créant une source constante d'excitation, et les modes propres de la structure. Il peut subsister pendant de longues durées de vol (approche ou décollage par exemple). La réponse à cette excitation est stable et reproductible. En conséquence, pour des conditions de vol déterminées en Mach, altitude et incidence, la loi de contrôle est parfaitement définie en module et phase, ce qui permet d'atténuer, de la quantité souhaitée, le niveau des perturbations, ce qui n'est pas le cas pour un contrôle de rafale.

A titre d'exemple d'application de l'invention, on peut donner les résultats d'essais effectués en soufflerie sur une maquette d'aile moderne destinée à un avion volant en croisière à M = 0,78 à 9000 mètres (30 000 pieds), à une incidence normale $\alpha$ = 1,9 à 2° , au-delà de laquelle apparaît le tremblement.

Le niveau des contraintes dues au moment de flexion dynamique du premier mode de la voilure au point le plus chargé de l'aile a été réduit de 90%. Le second mode a été atténué de 60%, sans modification des caractéristiques de vol de l'avion en Cz ou CM.

Le contrôle du tremblement était obtenu à partir d'oscillations de faibles amplitudes de la surface de commande choisie. Les angles dynamiques pour réduire de 90% le niveau vibratoire étaient à M = 0,78, pour une incidence de $\alpha$ = 4,5°, de ± 30'.

L'invention sera mieux comprise à la lecture de la description qui suit de modes particuliers d'exécution de celle-ci, donnés à titre d'exemples non limitatifs. La description se réfère aux dessins qui l'accompagnent, dans lesquels :

- la Figure 1A est un schéma de principe montrant un aéronef équipé conformément à un mode particulier d'exécution de l'invention, les moteurs n étant pas représentés,
- la Figure 1B est un diagramme représentant la répartition, le long de l'envergure de l'aile, des sollicitations alternées engendrées par une gouverne oscillante, c'est-à-dire la variation de portance instationnaire ;
- la Figure 2 est un schéma de principe montrant les fonctions remplies par le circuit de traitement du signal dans le dispositif de mise en oeuvre de l'invention montré en Figure 1A ;
- la Figure 3 est un diagramme tracé à partir d'essais comparatifs effectués en soufflerie aérodynamique, montrant la densité spectrale du moment de flexion sur l'aile en fonction de la fréquence, sans mise en oeuvre de l'invention (courbe en tirets) et avec mise en oeuvre (courbe en trait plein) ;
- la Figure 4, similaire à la Figure 1A, montre un autre mode d'exécution de l'invention, dans lequel les sollicitations alternées appliquées pour réduire le tremblement sont obtenues à l'aide des aérofreins internes ;
- les Figures 5 et 6 montrent deux exemples de réalisation de la commande hydraulique d'une gouverne oscillante en vue de la mise en oeuvre de l'invention.

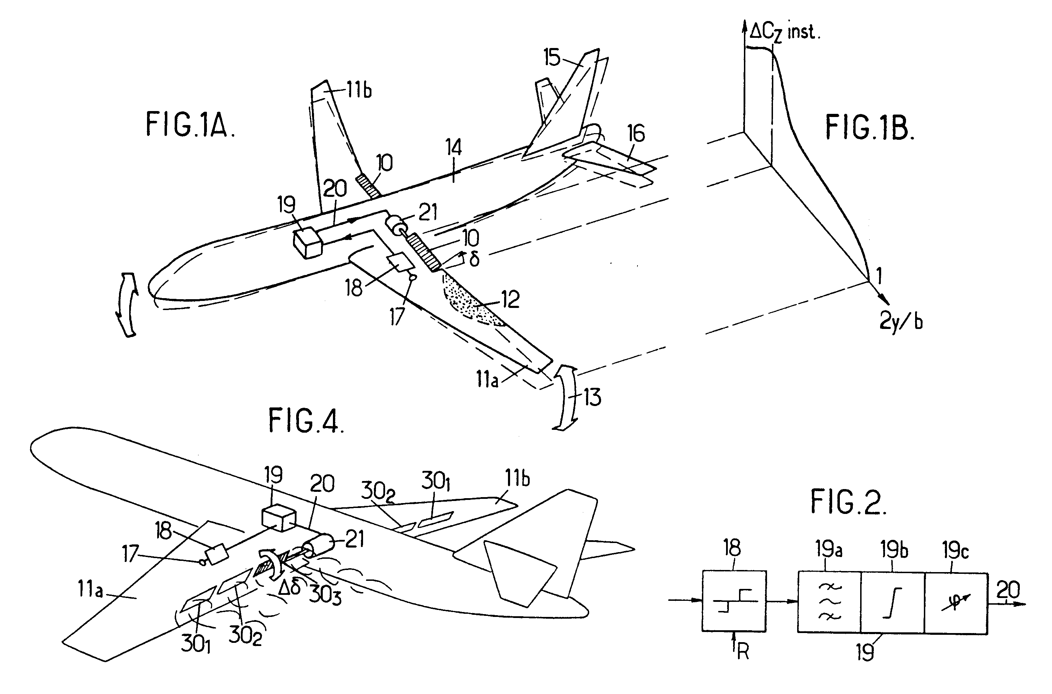

Un avion de transport de passagers actuel comporte généralement une voilure constituée de deux ailes en flèche 11a et 11b munies de nombreuses surfaces mobiles. Une disposition fréquente consiste à prévoir au bord de fuite, de l'emplanture au bout de l'aile, successivement, un jeu de volets de bord de fuite ou flaperons, un aileron de commande en vol rapide, un second jeu de volets, puis un aileron de commande d'assiette en roulis en vol lent. L'extrados de l'aile porte de plus des aérofreins destructeurs de portance, fréquemment disposés en avant du jeu de volets. Seuls les volets internes 10 ont été représentés sur la figure 1A, avec l'incidence $\delta$ par rapport au plan moyen des ailes 11a, 11b qui leur est donnée au cours de certaines phases du vol.

Au cours de ces mêmes phases, une zone de décollement pulsatoire 12 peut apparaître et provoquer une oscillation de l'aile représentée, pour l'aile 11a, par la flèche double 13 sur la figure 1A. Ce mouvement de l'aile induit un mouvement vibratoire de l'ensemble du fuselage 14 de la dérive 15 et de l'empennage 16 de l'avion, schématisé sur la figure 1A par le tracé en tirets. La vibration suivant le mode d'ensemble qui en résulte constitue le tremblement.

Le dispositif suivant l'invention comporte, pour chaque aile, un détecteur 17 de mesure d'un paramètre représentatif de la contrainte dynamique due aux déformations de la voilure. Ce détecteur 17 est, par exemple, constitué par une jauge de contrainte collée sur la structure de l'aile, par exemple sur un longeron, au voisinage de l'emplanture. Cette jauge est placée dans un pont de mesure qui fournit un signal de sortie électrique. Ce détecteur fournit un signal représentatif de l'ensemble des contraintes (statiques et dynamiques) existant dans l'aile. D'autres types de détecteurs peuvent être utilisés, par exemple un accéléromètre ou un capteur de pression instationnaire dont le signal de sortie n'est pas affecté d'une composante continue.

Le signal de sortie du capteur est traité par un système de traitement du signal et de calcul, qui peut être de nature analogique, numérique ou hybride. Ce système peut notamment comporter un circuit 18 à seuil réglable R, qui ne fournit un signal de sortie que lorsque l'amplitude du signal fourni par le capteur 17 dépasse un niveau supérieur au seuil de vibration normal de l'aile. Le seuil R peut être ajustable, éventuellement de façon automatique, pour tenir compte de divers paramètres, par exemple la masse de l'avion.

Le signal provenant du circuit à seuil 18 est traité par des moyens de calcul 19 qui, dans le mode de réalisation montré en figure 2, comportent un filtre de bande 19a dont la bande passante correspond au mode de flexion de l'aile à corriger. En règle générale, il s'agira de la fréquence fondamentale d'oscillation en flexion autour d'un axe parallèle à l'axe de roulis de l'avion. Le filtre 19a est suivi d'un circuit pseudo-intégrateur 19b destiné à élaborer un signal représentatif de la vitesse du mouvement d'oscillation. Enfin, un circuit de réglage de phase 19c élabore un signal représentant la phase correcte pour amortir le mouvement, avec l'amplitude adaptée compte tenu des caractéristiques propres de la surface aérodynamique utilisée pour réduire le tremblement.

La figure 1B représente, pour une aile en flèche à grand allongement du genre montré en figure 1A, la répartition de la force d'amortissement Cz découlant des forces de portance instationnaire engendrées par les oscillations d'une gouverne en fonction de la distance à l'emplanture y à la demi-envergure totale b/2. L'efficacité est la mieux répartie en envergure pour des gouvernes proches de l'emplanture. Cette caractéristique est utilisée, dans le cas illustré en figure 1A, en utilisant les flaperons 10, commandés en incidence selon une loi stationnaire lors du pilotage normal, pour amortir le tremblement en juxtaposant une loi instationnaire à la loi stationnaire. On voit sur la figure 1B, qui correspond à une situation représentative des conditions réelles de vol sur un avion commercial actuel ($\Delta$ = 1 radian, M = 0,78, $\omega$ R = 0,18) que les flaperons internes 10 se trouvent dans la zone d'efficacité maximale.

Chacun des flaperons internes 10 est muni d'un organe normal de commande représenté en 21, constitué par exemple par un vérin hydraulique, associé à une vanne pilotée par des électrovannes qui reçoivent le signal de sortie du circuit 19. On peut également utiliser des moyens électriques, bien que cette solution soit moins fréquente actuellement.

En général, l'amplitude des oscillations nécessaires pour réduire le tremblement est très faible, de l'ordre de ± 1°. Ces oscillations peuvent être obtenues soit en utilisant les moyens moteurs 21 qui servent à la commande stationnaire, soit en ajoutant un moyen moteur supplémentaire en cascade avec le premier.

Les circuits 18 et 19 indépendants peuvent être prévus pour chaque aile ou au contraire on peut prévoir un système global permettant d'élaborer les ordres nécessaires pour les deux ailes et éventuellement de les combiner avec les ordres de commande suivant une loi stationnaire. Ce même système centralisé peut être prévu pour actionner simultanément ou en fonction des conditions de vol plusieurs surfaces aérodynamiques différentes, notamment pour tenir compte des conditions de vol. On voit en particulier que l'invention peut notamment être intégrée à un système de contrôle automatique généralisé.

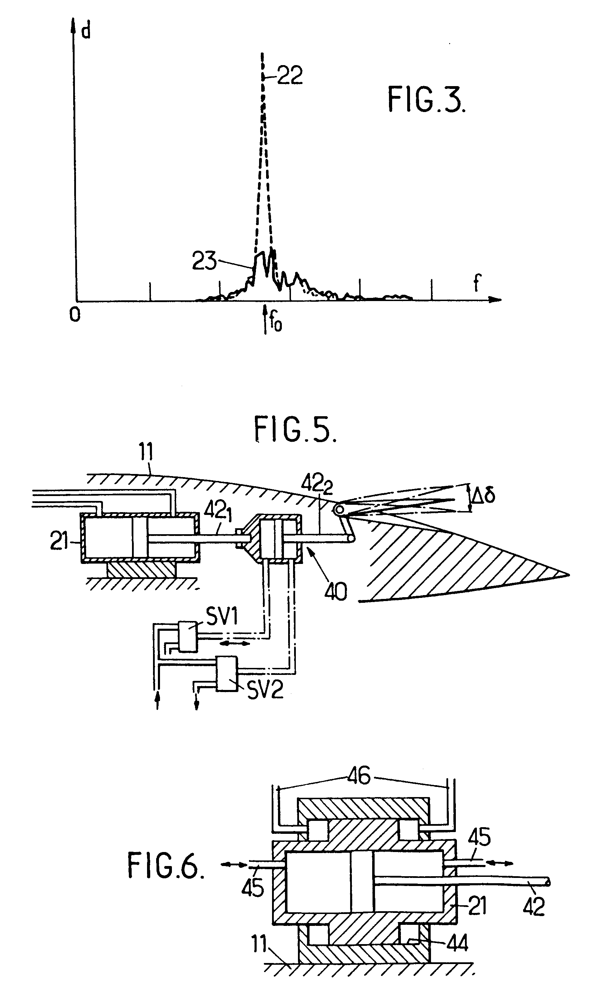

Des essais menés en soufflerie pour vérifier la validité du procédé suivant l'invention ont notamment permis de tracer le diagramme de la figure 3, qui donne la variation de la densité spectrale d du moment de flexion en fonction de la fréquence $\bar{f}$.

La courbe 22 donne les résultats des essais sur une aile classique en flèche. La courbe 23 montre les résultats d'un essai effectué en combattant le tremblement de la même aile par des sollicitations engendrées par un flaperon oscillant, commandées par un circuit retenant uniquement les vibrations limitées au premier mode de vibration de l'aile en flexion. On constate un applatissement de la courbe de densité spectrale, avec notamment suppression quasi complète de la pointe correspondante à la fréquence $f_0$ du premier mode de vibration de la voilure en flexion.

De façon plus générale, les résultats obtenus lors des essais montrent que l'invention permet d'obtenir une réduction de 70 à 80% de l'amplitude dynamique de vibration de l'aile due au tremblement, d'où réduction de la fatigue dynamique de la structure de l'avion, amélioration du confort et augmentation du domaine de vol. Ce résultat est atteint sans modification du phénomène de décollement, par réduction de la réponse dynamique de la voilure.

Dans le mode de réalisation montré en figure 4, la réduction du tremblement est obtenue par commande des aérofreins. Sur cette figure 4, on a représenté sur chaque aile des aérofreins ou "spoilers" $30_1$, $30_2$, $30_3$ montrés en position ouverte, c'est-à-dire faisant avec le plan moyen de la voilure un angle de 30 à 60° en général. Lorsque les aérofreins sont ainsi ouverts, ils provoquent fréquemment un phénomène de tremblement qui se répercute sur la voilure et sur l'ensemble de la structure de l'avion. Pour tenir compte de la répartition d'efficacité, telle qu'elle est illustrée en figure 1B, il sera généralement avantageux d'utiliser uniquement les deux aérofreins internes $30_3$ pour combattre le tremblement. Le circuit en boucle fermée de commande peut avoir une constitution similaire à celle montrée en figure 1A et comporter encore un détecteur 17, un circuit à seuil 18 et un circuit de traitement de signal du circuit 19. Le servomoteur de commande 21 de l'aérofrein interne $30_3$ reçoit, par la ligne 20, le signal électrique de commande élaboré par le circuit 19. Encore une fois l'amplitude $\Delta\delta$ à donner aux volets autour de l'incidence moyenne $\delta$ est faible, de l'ordre du degré.

Les moyens moteurs de commande suivant une loi instationnaire et leur mode de commande peuvent être de nature très diverse, comme cela a déjà été indiqué plus haut. La transmission des signaux de détection et de commande s'effectuera généralement par voie électrique, sous forme analogique puis numérique, bien que l'on puisse également utiliser une transmission par voie optique, par exemple comme indiqué dans le document EP-A-0046 875.

De même, les moyens moteurs de commande des gouvernes peuvent avoir des constitutions très diverses. Les figures 5 et 6 montrent deux variantes qui, l'une et l'autre, ont l'avantage de limiter l'amplitude du mouvement d'oscillation destiné à combattre le tremblement, de sorte qu'une panne éventuelle du système n'a pour conséquence que le retour aux conditions de vol sans amortissement du tremblement, sans conséquence dangereuse pour l'avion.

Dans le cas illustré en figure 5, le dispositif 40 de commande du mouvement oscillant d'amplitude $\Delta\delta$ est inséré en cascade avec le vérin 21 de commande stationnaire de la gouverne 41. Le dispositif 40 comporte un vérin dont le cylindre est solidaire d'un tronçon $42_1$ de la bielle de commande de la gouverne 41 reliée à l'organe mobile du vérin 21 et dont le piston est relié à l'autre tronçon $42_2$ de la bielle. L'admission et l'échappement de liquide vers et à partir des compartiments du vérin à double effet 40 peuvent être commandés par des servovalves $SV_1$ et $SV_2$. Les fonds du cylindre peuvent constituer butée limitant les déplacements.

Dans le cas illustré en figure 6, on retrouve un vérin de commande stationnaire de la gouverne dont l'organe mobile attaque la gouverne par l'intermédiaire d'une bielle 42, cette fois d'une seule pièce. L'admission et l'échappement de fluide dans les compartiments du vérin s'effectuent par des conduites 45 reliées à au moins une vanne, généralement pilotée par servovalves. Le corps du vérin 21 est monté coulissant, avec un faible débattement, dans l'alésage 44 d'un boîtier supplémentaire solidaire de la structure de l'aile. La conduite instationnaire est obtenue par l'admission et l'échappement de fluide par l'intermédiaire de canalisations 46 commandées par servovalves.

L'invention est susceptible de nombreuses variantes encore de réalisation, permettant de combattre un seul ou plusieurs modes de vibration de la voilure. Dans tous les cas, la solution originale apportée par l'invention est de mise en oeuvre aisée, peu onéreuse et très efficace.

**Revendications**

1. Procédé de réduction du tremblement d'un élément de voilure d'aéronef, suivant lequel on génère un signal électrique représentatif de l'amplitude, de la fréquence et de la phase du tremblement par mesure d'un paramètre représentatif du tremblement, on soumet le signal électrique à un filtrage destiné à isoler l'amplitude, la fréquence et la phase d'au moins un mode de vibration en flexion de l'élément de voilure, causé par le tremblement, on calcule la valeur et la loi de variation de forces alternées à appliquer dans une région localisée de l'élément de voilure pour amortir au moins ce mode de vibration, et on génère les forces alternées par interaction aérodynamique en agissant sur au moins une gouverne qui est également utilisée pour des fonctions de pilotage, l'action sur la gouverne étant sous forme d'oscillations commandées d'amplitude notablement plus faible que l'amplitude totale de déplacement de la gouverne en vue du pilotage.

2. Installation de réduction du tremblement de la voilure d'un aéronef, ladite voilure ayant des gouvernes placées à proximité de l'emplanture et actionnables en vue du pilotage de l'aéronef, comprenant au moins deux détecteurs (17) portés chacun par un élément de voilure et fournissant un signal électrique représentatif de l'amplitude, de la fréquence et de la phase d'un paramètre lié au tremblement dans l'élément de voilure ; des moyens de filtrage pour extraire des signaux électriques un signal filtré représentatif d'un mode de vibration en flexion des éléments de voilure provoqué par le tremblement ; des moyens de traitement de signal recevant les signaux filtrés et prévus pour fournir les signaux de commande d'un mouvement oscillatoire de la gouverne sur chacun des éléments de voilure dans un domaine angulaire nécessaire pour atténuer les contraintes dues au tremblement, les signaux de commande étant superposés aux signaux statiques de mise en action des gouvernes en vue du pilotage de l'aéronef.

3. Installation selon la revendication 2, caractérisée en ce que les moyens de traitement du signal filtré comportent un pseudo-intégrateur et des moyens de réglage de phase.

4. Installation selon la revendication 2 ou 3, caractérisée en ce que les moyens de traitement fournissent à la gouverne un signal de commande selon une loi instationnaire se juxtaposant à la loi stationnaire de commande statique.

5. Installation selon la revendication 4, caractérisée en ce que la gouverne est constituée par un aérofrein ou un volet de bord de fuite et en ce que les moyens de traitement fournissent à la gouverne un signal de commande lui donnant une amplitude maximale d'oscillation de l'ordre du degré.

6. Installation selon l'une quelconque des revendications 2 à 5, caractérisée en ce que les moyens de mesure locale sont constitués par un pont de jauges de contrainte, un accéléro-mètre ou un capteur de pression instationnaire.

7. Installation selon l'une quelconque des revendications 2 à 6, caractérisée en ce que ladite gouverne est placée à proximité de l'emplanture de l'élément de voilure.

**Claims**

1. Method for reducing the amount of buffeting of an aircraft wing element, comprising : generating an electric signal representative of the amplitude, frequency and phase or the buffeting by measuring a parameter which is representative of buffeting ; subjecting the electrical signal to filtering for isolating the amplitude, frequency and phase of at least one mode of flexure vibration caused by buffeting ; computing the value and law of variation of alternate forces to be applied in one localized region of the wing element for damping at least that mode of vibration; and generating the alternate forces by aerodynamic interaction by actuation of at least one control surface which is also used for aircraft control, the actuation of the control surface being in the form of controlled oscillations having an amplitude significantly lower than the overall amplitude of movement of the control surface for aircraft control.

2. Installation for reducing the amount of buffeting of the wings of an aircraft, said wings having control surfaces located close to the roots and deflectable for control of the aircraft, comprising at least two detectors (17) each carried by a wing element and delivering an electric signal which is representative of the amplitude, frequency and phase of a parameter associated with buffeting in the wing element ; filtering means for extracting, from the electric signals, a filtered signal representative of one flexure vibration mode of the wing element caused by buffeting ; signal processing means receiving the filtered signals and arranged for delivering signals for causing an oscillatory movement of the control surface on each of the wing elements in an angular range necessary for alleviating the stresses due to buffeting, the control signals being superimposed to the static signals for driving the control surfaces for aircraft control.

3. Installation according to claim 2, characterized in that the means for processing the filtered signal comprise a pseudointegrator and phase control means.

4. Installation according to claim 2 or 3, characterized in that the processing means provide to the control surface an actuating signal according to a non stationary law, juxtaposed with the stationary law of static actuation.

5. Installation according to claim 4, characterized in that the control surface is constituted by a trailing edge flap or an aerobrake and in that the processing means deliver, to the control surface, an actuating signal for giving a maximum oscillation amplitude of the order of magnetude of one degree.

6. Installation according to any one of claims 2-5, characterized in that the means for local measurement comprise a bridge of strain gauges, an accelerometer or a non-stationary pressure sensor.

7. Installation according to any one of claims 2-6, characterized in that said control surface is located close to the root of the wing element.

**Patentansprüche**

1. Verfahren zur Reduktion des Flatterns eines Tragwerkelements eines Luftfahrzeuges mit den Schritten Erzeugen eines elektrischen Signales, das die Amplitude, die Frequenz und die Schwingungsphase des Flatterns darstellt, durch Messen eines für das Flattern charakteristischen Parameters, Filtern des elektrischen Signales zum Trennen der Amplitude, der Frequenz und der Phase wenigstens eines Schwingungstyps bei durch das Flattern erzeugter Biegung des Tragwerkelements, Berechnen des Wertes und der Gesetzmäßigkeit der Veränderung von in einem lokalisierten Bereich des Tragwerkelements anzuwendenden Wechselkräften zum Dämpfen wenigstens des einen Schwingungstyps, und Erzeugen der Wechselkräfte durch aerodynamische Wechselwirkung mittels Einwirkens auf wenigstens eine Steuerfläche, die ebenfalls für Steuerungsfunktionen verwendet wird, wobei das Einwirken auf die Steuerfläche in Form von gesteuerten Schwingungen von wesentlich geringerer Amplitude als der gesamten Amplitude einer Bewegung der Steuerfläche zu Steuerungszwecken erfolgt.

2. Vorrichtung zur Reduktion des Flatterns des Tragwerks eines Luftfahrzeuges, wobei das Tragwerk in der Nähe der Tragwerkselementwurzel angeordnete und zur Steuerung des Luftfahrzeuges betätigbare Steuerflächen aufweist, mit wenigstens zwei Sensoren (17), von denen je einer von einem Tragwerkselement getragen ist und ein elektrisches Signal abgibt, das der Amplitude, der Frequenz und der Phase eines vom Flattern im Tragwerkselement abhängigen Parameters entspricht, Filtermitteln zum Ausfiltern eines bei durch das Flattern hervorgerufener Biegung der Tragwerkselemente einem Schwingungstyp entsprechenden gefilterten Signals, aus den elektrischen Signalen, Signalverarbeitungsmitteln, die die gefilterten Signale empfangen und zum Abgeben der Steuersignale für eine zum Dämpfen der durch das Flattern bedingten Belastungen in einem Winkelbereich erforderliche Schwingungsbewegung der Steuerfläche auf jedem Tragwerkselement vorgesehen sind, wobei die Steuersignale den statischen Signalen zum Betätigen der Steuerflächen zum Steuern des Luftfahrzeuges überlagert sind.

3.  Vorrichtung nach Anspruch 2,
    **dadurch gekennzeichnet,**
    daß die Signalverarbeitungsmittel für das gefilterte Signal einen Pseudointegrator und Phasenregelungsmittel aufweisen.

4.  Vorrichtung nach Anspruch 2 oder 3,
    **dadurch gekennzeichnet,**
    daß die Signalverarbeitungsmittel an die Steuerfläche ein Steuersignal gemäß einer stationären Gesetzmäßigkeit abgeben, die sich der stationären Gesetzmäßigkeit der statischen Steuerung überlagert.

5.  Vorrichtung nach Anspruch 4,
    **dadurch gekennzeichnet,**
    daß die Steuerfläche von einer Luftbremse oder einer Hinterkantenklappe gebildet ist und daß die Signalverarbeitungsmittel an die Steuerfläche ein Steuersignal abgeben, das an der Steuerfläche eine maximale Schwingungsamplitude von der Größenordnung eines Grads bewirkt.

6.  Vorrichtung nach einem der Ansprüche 2 bis 5,
    **dadurch gekennzeichnet,**
    daß die Mittel zur lokalen Messung von einer Dehnungsmeßmittelbrücke, einem Beschleunigungsmesser oder einem Sensor für instationären Druck gebildet sind.

7.  Vorrichtung nach einem der Ansprüche 2 bis 6,
    **dadurch gekennzeichnet,**
    daß die Steuerfläche in der Nähe der Wurzel des Tragwerkselements angeordnet ist.

FIG.1B.

FIG.2.

FIG.1A.

FIG.4.

FIG.3.

FIG.5.

FIG.6.